# EUROPÄISCHE PATENTSCHRIFT

(11) **EP 2 935 927 B1**
(45) Veröffentlichungstag und Bekanntmachung des Hinweises auf die Patenterteilung: **03.07.2019**
(21) Anmeldenummer: 13824116.1
(22) Anmeldetag: 12.12.2013
(51) Int. Cl.: F16F 15/134

(54) **KUPPLUNGSEINRICHTUNG**
CLUTCH DEVICE
DISPOSITIF D'EMBRAYAGE

(30) Priorität: 20.12.2012 DE 102012223959
(43) Veröffentlichungstag der Anmeldung: 28.10.2015
(73) Patentinhaber: Schaeffler Technologies AG & Co. KG, 91074 Herzogenaurach (DE)
(72) Erfinder: VOGEL, Florian, 77815 Bühl (DE)
(86) Internationale Anmeldenummer: PCT/DE2013/200360
(87) Internationale Veröffentlichungsnummer: WO 2014/094769

(56) Entgegenhaltungen:
- WO-A1-2013/186101
- DE-A1-102010 017 870
- DE-A1-102010 048 827
- DE-A1-102010 048 828

## Beschreibung

Die Erfindung betrifft eine Kupplungseinrichtung eines Fahrzeugs, insbesondere eine Booster-Kupplung. Zum Beispiel offenbart die DE102010048827 A1 eine Booster-Kupplungseinrichtung, zumindest umfassend einen Kupplungsflansch und eine Kupplungsnabe, die koaxial zueinander angeordnet und miteinander über eine Federeinrichtung gekoppelt sind, wobei der Kupplungsflansch einen Lamellenkorb bildet zur Aufnahme von Lamellen für eine Kupplung.

Um die Betätigungskräfte bei einer Kupplung signifikant abzusenken, müssen neue Wege beschritten werden. Eine Möglichkeit ist der Einsatz einer sogenannten Booster-Kupplung. Dieses Kupplungssystem weist eine Vorsteuerkupplung und eine Hauptkupplung auf. Hierbei sind beide Elemente durch ein Rampensystem über Wälzkörper miteinander verbunden. Beim Schließen der Vorsteuerkupplung werden durch das aufgebaute Moment die Rampen des Rampensystems verdreht und so die Hauptkupplung geschlossen. Die für die Betätigung der Hauptkupplung erforderliche Energie wird bei diesem System vom Motor geliefert und es muss von außen nur die Kraft zum Schließen der Vorsteuerkupplung aufgebracht werden.

Ein zentrales Bauteil einer solchen Booster-Kupplungseinrichtung ist ein sogenannter Drehmomentfühler. Die Booster-Kupplungseinrichtung weist eine Vorsteuerkupplung und eine Hauptkupplung auf. Insbesondere sind ein Motor und ein Getriebe vorgesehen, die durch die Booster-Kupplungseinrichtung verbunden beziehungsweise gekoppelt werden. Die Vorsteuerkupplung und die Hauptkupplung sind durch das oben angeführte Rampensystem miteinander verbunden. Ein übertragbares Drehmoment vom Motor zum Getriebe entspricht einer Hauptkupplungsanpresskraft. Die Hauptkupplungsanpresskraft entspricht einer axialen Verschiebung einer Anpressplatte (Lamellen der Hauptkupplung). Eine axiale Verschiebung entspricht wiederum einer Verdrehung einer Rampe um einen Winkel. Deswegen entspricht ein übertragbares Drehmoment einer Verdrehung der Rampe um einen Winkel. Das Verhältnis zwischen Drehmoment und Winkel kann über eine Rampenmomentkennlinie dargestellt werden.

Den Drehmomentfühler kann man sich als Torsionsfedereinrichtung vorstellen, die insbesondere zwischen dem Getriebe und der Hauptkupplung angeordnet ist. Tritt nun ein Lastwechsel auf, so ändert sich das übertragene Drehmoment in dem Antriebsstrang, was wiederum die Spannung der Torsionsfedereinrichtung ändert. Um ein Verklemmen des Rampensystems bei derartigen Lastwechseln zu vermeiden, muss die Federkennlinie der Torsionsfedereinrichtung entsprechend eingestellt sein und möglichst der Rampenmomentkennlinie entsprechen. Damit kann gewährleistet werden, dass bei einem Lastwechsel das sich ändernde zu übertragende Drehmoment durch eine Anpassung der Anpresskraft der Hauptkupplung nun sicher übertragen werden kann. Ein in einem Antriebsstrang eingesetzter Drehmomentfühler ermöglicht, dass bei einer solchen Momentvariation beim Lastwechsel eine Verdrehung verursacht wird, wobei der auftretende Torsionsfederwinkel einem Drehmoment entspricht. Ist die Torsionsfedersteifigkeit zu gering, so kann sich die Torsionsfedereinrichtung zu stark verdrehen, so dass eine der Rampen eine Position einnimmt, bei welcher die Anpresskraft gegenüber dem zu übertragenden Drehmoment zu gering ist. Ist die Torsionsfedersteifigkeit jedoch größer als die Rampenmomentsteifigkeit, so kann die Rampe verklemmt bleiben.

Derartige Kupplungseinrichtungen beziehungsweise Booster-Kupplungen mit Drehmomentfühlern sind bekannt, jedoch weisen diese eine hohe Komplexität auf und sind entsprechend anspruchsvoll hinsichtlich der Fertigung und Montage. Weiterhin weisen diese Kupplungseinrichtungen zahlreiche Einzelteile auf, die jeweils eine aufwändige Bearbeitung erfordern, um die Funktion der Kupplungseinrichtung zu gewährleisten.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft eine Kupplungseinrichtung gemäß Anspruch 1, insbesondere eine Booster-Kupplungseinrichtung, zumindest umfassend einen Kupplungsflansch und eine Kupplungsnabe, die koaxial zueinander angeordnet und miteinander über eine Federeinrichtung mit einer mehrstufigen Federkennlinie gekoppelt sind. Der Kupplungsflansch bildet einen Lamellenkorb zur Aufnahme von Lamellen für eine Kupplung.

Es sei in diesem Zusammenhang darauf hingewiesen, dass im Folgenden jeweils auf Lamellen als Übertragungsmittel zwischen Lamellenkorb und Kupplung verwiesen wird. Alternativ zu den Lamellen können Ein- oder Mehrscheibensysteme jedoch gleichermaßen eingesetzt werden.

Wie bereits oben ausgeführt, sind Booster-Kupplungen Ein- oder Mehrscheiben- beziehungsweise Lamellen-Kupplungen, die die Anpresskraft zum Erzeugen eines übertragbaren Moments von einer Kraftmaschine zum Beispiel auf ein Getriebe mit Hilfe eines Rampensystems erzeugen. Dabei kommt ein Drehmomentfühler zum Einsatz, der zum Sensieren des anliegenden Drehmoments in der Kupplung benutzt wird. Er sorgt dafür, dass in der Booster-Kupplung immer nur das zu übertragende Drehmoment anliegt. Ebenso ist er dafür verantwortlich, dass die Booster-Kupplung wieder geöffnet werden kann und der Antriebsstrang und die Rampen sich nicht verspannen beziehungsweise verklemmen. Ein solcher Drehmomentfühler wird üblicherweise zwischen einem Getriebe und der Hauptkupplung eingesetzt, wobei die Hauptkupplung die oben genannten Lamellen trägt. Im Rahmen der vorliegenden Erfindung wird nun vorgeschlagen, dass die Funktion des Drehmomentfühlers und Teile der Kupplung miteinander in wenigen Bauteilen vereint werden.

Aus dem Stand der Technik sind entsprechende Drehmomentfühler bekannt, bei denen aus Kupplungsnabe und Kupplungsflansch, die miteinander über eine Federeinrichtung gekoppelt sind, ein Drehmomentfühler gebildet ist. Solche Drehmomentfühler werden zwischen dem Lamellenkorb und dem Getriebe angeordnet. Hier werden nun erstmalig die Funktionen dieser Bauteile Lamellenkorb und Drehmomentfühler miteinander vereint. Dadurch können Bauteile eingespart und die Komplexität der Kupplungseinrichtung deutlich reduziert werden. Dadurch ist es möglich, ein kostengünstiges und robustes Kupplungssystem herzustellen, das für den Einsatz in Kraftfahrzeugen, zum Beispiel Personenkraftwagen (PKW), Lastkraftwagen (LKW), Motorrädern, besonders geeignet ist. Insbesondere können als Kraftmaschinen Brennkraftmaschinen oder aber Elektromaschinen eingesetzt werden, wobei die vorliegende Kupplungseinrichtung für alle Arten von Kupplungen einsetzbar ist (beispielsweise Handschaltung, Automatik, "e-clutch", ...).

Insbesondere ist die eine Scheibe oder die Mehrzahl an Scheiben beziehungsweise sind die Lamellen der Kupplung unmittelbar mit dem Kupplungsflansch verbunden, so dass keine weiteren Bauteile notwendig sind, um ein Drehmoment zwischen den Scheiben beziehungsweise Lamellen und dem Kupplungsflansch zu übertragen.

Gemäß einer vorteilhaften Ausführungsform umschließt der Kupplungsflansch die Kupplungsnabe in einer radialen Richtung gesehen außen von beiden Seiten der Kupplungsnabe und bildet dort eine erste Aufnahme für die Lamellen.

Insbesondere ist der Kupplungsflansch zweiteilig ausgeführt, wobei jedes Teil des zweiteiligen Kupplungsflanschs auf jeweils einer Seite der Kupplungsnabe angeordnet ist.

Erfindungsgemäß weist die Kupplungsnabe mindestens eine zweite Aufnahme für mindestens eine Blattfeder auf, wobei die mindestens eine Blattfeder durch die Kupplungsnabe selbst fixiert ist, insbesondere durch Klemmung. Insbesondere kann auch eine Mehrzahl von Blattfedern in der mindestens einen zweiten Aufnahme angeordnet werden. Insbesondere sind weiterhin, in einer Umfangsrichtung gesehen, mehrere zweite Aufnahmen in der Kupplungsnabe vorgesehen, in denen jeweils mindestens eine Blattfeder angeordnet ist. Die Blattfedern wirken als Federn mit entsprechenden Anschlägen am Kupplungsflansch zusammen und bilden so eine Federeinrichtung.

Insbesondere sind zusätzlich weitere Federn, insbesondere Torsionsfedern, in weiteren dritten Aufnahmen angeordnet, die ebenfalls mit weiteren Anschlägen am Kupplungsflansch in gekoppelt sind und in einer Umfangsrichtung als Federeinrichtung zusammenwirken.

Die Federn der Federeinrichtung bewirken im Zusammenspiel infolge ihrer besonderen Anordnung eine mehrstufige Federkennlinie. Diese Federkennlinie wird im Zusammenhang mit den Figuren näher erläutert.

Insbesondere weist die mindestens eine zweite Aufnahme einen ersten Anschlag auf, durch den die mindestens eine Blattfeder in einer radialen Richtung nach außen fixiert ist. Durch diesen ersten Anschlag wird unter anderem eine sichere Montage der mindestens einen Blattfeder ermöglicht, da der erste Anschlag die Position der mindestens einen Blattfeder in einer radialen Richtung festlegt.

Insbesondere weist der Kupplungsflansch zumindest auf einer Seite der Kupplungsnabe einen zweiten Anschlag auf, durch den die mindestens eine Blattfeder in zumindest einer axialen Richtung fixiert ist.

Insbesondere wird vorgeschlagen, dass die Blattfeder durch die Kupplungsnabe in einer Position in Umfangsrichtung in der zweiten Aufnahme fixiert ist. Insbesondere wird die mindestens eine Blattfeder zusätzlich durch einen ersten Anschlag in einer radialen Richtung nach außen fixiert, so dass somit auch die Position in der radialen Richtung fixierbar ist. Insbesondere wird nun also vorgeschlagen, dass durch den Kupplungsflansch ein zweiter Anschlag bereitgestellt wird, durch den die mindestens eine Blattfeder auch in der axialen Richtung fixiert ist, so dass damit die Anordnung der mindestens einen Blattfeder in der Kupplungsnabe beziehungsweise in der Kupplungseinrichtung vollständig festgelegt ist.

Besonders vorteilhaft ist es, wenn sich der Kupplungsflansch auch über die zweite Seite der Kupplungsnabe erstreckt und dort einen weiteren zweiten Anschlag bereitstellt, so dass die mindestens eine Blattfeder auch in der anderen axialen Richtung fixiert ist. Entsprechend ist die Blattfeder dann durch den Kupplungsflansch auf beiden Seiten der Kupplungsnabe in der axialen Richtung vollständig fixiert.

Erfindungsgemäß erstreckt sich sich die mindestens eine Blattfeder in einer radialen Richtung und in einem äußeren ersten Abschnitt durch die Kupplungsnabe fixiert ist und mit einem weiter innen liegenden zweiten Abschnitt mit dem Kupplungsflansch als Federeinrichtung gekoppelt ist.

Insbesondere weist die mindestens eine Blattfeder in dem inneren zweiten Abschnitt einen Bereich auf, der zumindest in einer axialen Richtung über die zweite Aufnahme der Kupplungsnabe übersteht, wobei der Bereich mit einem dritten Anschlag des Kupplungsflanschs in einer Umfangsrichtung als Federeinrichtung gekoppelt ist.

Gemäß einer besonders vorteilhaften Ausführungsform der Kupplungseinrichtung ist der Kupplungsflansch zur Kupplungsnabe in beiden Umfangsrichtungen verdrehbar angeordnet und weist der Kupplungsflansch mehrere, in beide Umfangsrichtungen wirkende Anschläge auf, die jeweils mit Federn, die in der Kupplungsnabe angeordnet sind, gekoppelt sind. Diese Anschläge und Federn wirken als Federeinrichtung in beiden Umfangsrichtungen zusammen. Das sukzessive Zusammenwirken von Federn und Anschlägen lässt sich durch eine Federkennlinie abbilden. Insbesondere sind nun die in der einen Umfangsrichtung wirkenden Anschläge gegenüber den in der anderen Umfangsrichtung wirkenden Anschlägen unterschiedlich ausgebildet, so dass die Federeinrichtung in unterschiedlichen Umfangsrichtungen unterschiedlich wirkt, also insbesondere eine unterschiedliche Federkennlinie aufweist.

Gemäß einer weiteren vorteilhaften Ausführungsform der Kupplungseinrichtung weist die Kupplungsnabe zwei, jeweils in eine axiale Richtung weisende, Seiten auf, die identisch zueinander ausgeführt sind. Durch diese besonders vorteilhafte Ausführungsform kann die Montage der Kupplungseinrichtung weiter vereinfacht werden, da der Aufbau der Kupplungseinrichtung unabhängig von der Orientierung der Kupplungsnabe vorgenommen werden kann. Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen in den Figuren bezeichnen gleiche Gegenstände. Es zeigen:
- Fig. 1:: eine Kupplungseinrichtung in einem Kraftfahrzeug;
- Fig. 2:: eine Kupplungseinrichtung, bestehend aus Kupplungsflansch und Kupplungsnabe in einer perspektivischen Ansicht;
- Fig. 3:: eine Kupplungseinrichtung bestehend aus Kupplungsflansch und Kupplungsnabe in einer Seitenansicht;
- Fig. 4:: ein Detail aus Fig. 3, teilweise geschnitten;
- Fig. 5:: ein Detail der Kupplungseinrichtung in einer perspektivischen Ansicht und teilweise im Schnitt;
- Fig. 6:: eine Federkennlinie; und
- Fig. 7:: ein Kraftfahrzeug.

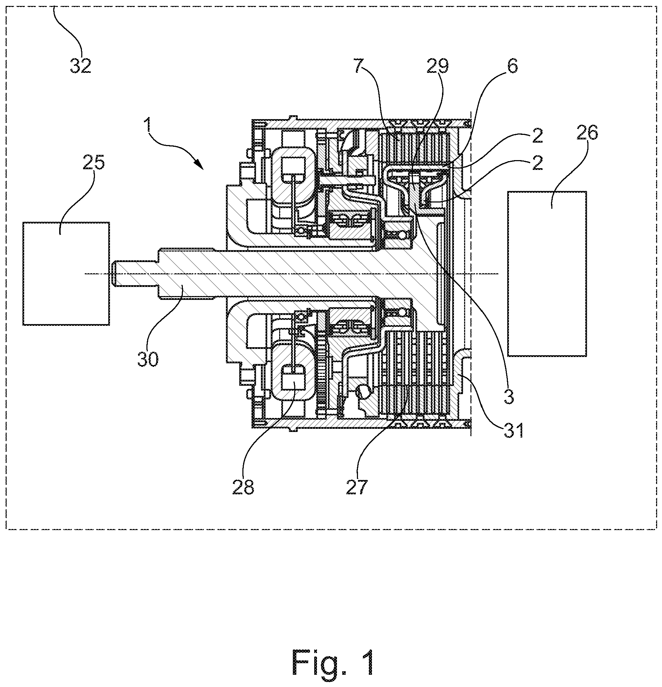

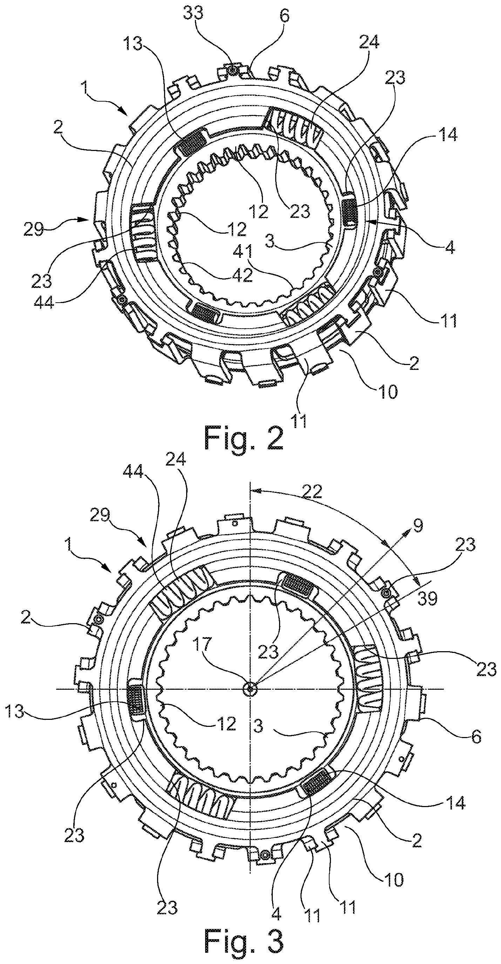

Fig. 1 zeigt eine Kupplungseinrichtung 1 in einem Kraftfahrzeug 32. Die Kupplungseinrichtung 1 ist über eine Antriebswelle 30 mit einem Motor 25 verbunden und über eine Abtriebswelle 31 mit einem Getriebe 26. Die Kupplungseinrichtung 1 verbindet also den Motor 25 und das Getriebe 26 des Kraftfahrzeugs 32 zur Übertragung eines Drehmoments. Die Kupplungseinrichtung 1 weist eine Vorsteuerkupplung 28 und eine Hauptkupplung 27 auf. Die Hauptkupplung 27 weist Lamellen 7 auf, die, wenn kraftschlüssig miteinander verbunden, ein Drehmoment des Motors 25 auf die Abtriebswelle 31 übertragen. Innerhalb der Hauptkupplung 27 ist weiterhin ein Drehmomentfühler 29 angeordnet. In der hier gezeigten Darstellung ist die Hauptkupplung 27 im oberen Teil aufgeschnitten gezeigt, so dass der Drehmomentfühler 29 dort sichtbar ist. Dieser Drehmomentfühler 29 umfasst einen Kupplungsflansch 2 und eine Kupplungsnabe 3. Die vorliegende Erfindung ist nun auf die besondere Ausgestaltung des Drehmomentfühlers 29 und (insbesondere) auf dessen Einbindung in die Hauptkupplung 27 gerichtet. Die folgenden Figuren 2-5 zeigen besonders bevorzugte Ausführungsvarianten der Erfindung.

Fig. 2 zeigt die Kupplungseinrichtung 1, bestehend aus Kupplungsflansch 2 und Kupplungsnabe 3 in einer perspektivischen Ansicht. Die Kupplungsnabe 3 ist im Bereich der Innenumfangsfläche 42 mit einer Keilverzahnung 41 ausgeführt, über die eine formschlüssige Verbindung mit der Antriebswelle 30 (hier nicht gezeigt) hergestellt werden kann. Die Kupplungsnabe 3 weist eine erste Seite 12 und eine zweite Seite 12 (hier hinter der Zeichnungsebene) auf. Weiterhin weist die Kupplungsnabe 3 zweite Aufnahmen 13 auf für Blattfedern 14 dritte Aufnahmen 44 für Federn 24 (hier Torsionsfedern). Die Kupplungsnabe 3 wird von einem zweiteiligen Kupplungsflansch 2 radial außen umfasst. Die zwei Teile 11 des Kupplungsflanschs 2 sind durch Befestigungselemente 33 in der axialen Richtung miteinander verbunden. Der Kupplungsflansch 2 weist weiterhin Anschläge 23 auf, die mit den Blattfedern 14 beziehungsweise Federn 24 als Federeinrichtung 4 zusammenwirken. Der Kupplungsflansch 2 bildet weiterhin einen Lamellenkorb 6, der mit den Lamellen 7 der Hauptkupplung 27 (hier nicht gezeigt) in Eingriff steht. Die Lamellen 7 der Hauptkupplung 27 sind also an dem Lamellenkorb 6 des Kupplungsflanschs 2 angeordnet und werden durch diesen zur Drehmomentübertragung angetrieben. Die Lamellen 7 (hier nicht gezeigt) werden in ersten Aufnahmen 10 des Lamellenkorbs 6 angeordnet. Die Kupplungseinrichtung 1 bildet so einen Drehmomentfühler 29, wobei die Funktion des Lamellenkorbs 6 direkt mit in den Kupplungsflansch 2 integriert wurde.

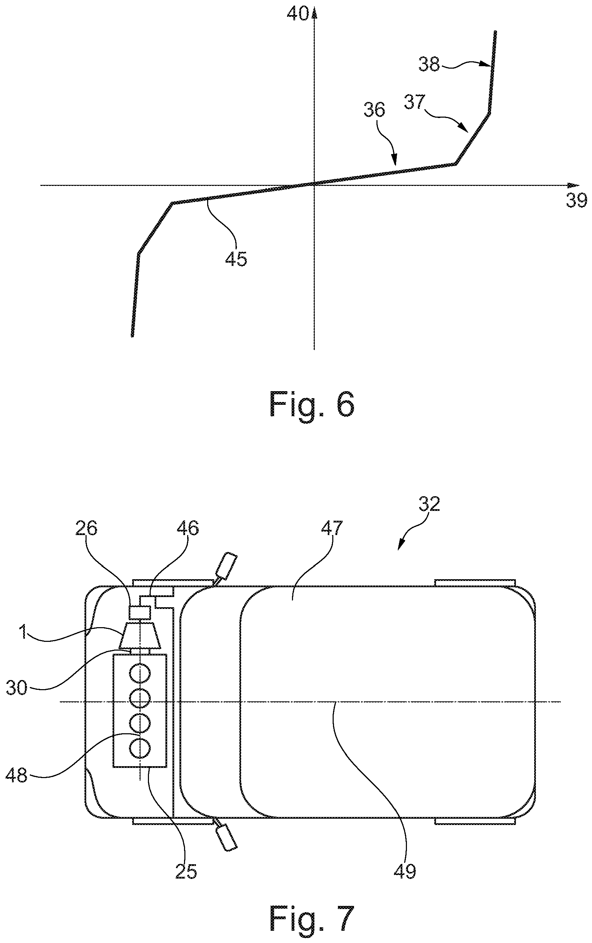

Fig. 3 zeigt eine Kupplungseinrichtung 1 mit Kupplungsflansch 2 und Kupplungsnabe 3 in einer Seitenansicht. Der Kupplungsflansch 2 wird durch zwei Teile 11 gebildet, die die Kupplungsnabe 3 in einer radialen Richtung 9 gesehen außen umschließen. Der Kupplungsflansch 2 weist auf seiner Außenumfangsfläche erste Aufnahmen 10 auf, die zum Eingriff in Lamellen 7 (hier nicht gezeigt) der Hauptkupplung 27 vorgesehen sind. Die Kupplungsnabe 3 weist zweite Aufnahmen 13 auf, in denen Blattfedern 14 und dritte Aufnahmen 44, in denen Federn 24 angeordnet sind. Die Federn 24 und Blattfedern 14 sind mit Anschlägen 23 gekoppelt, so dass eine Federeinrichtung 4 zwischen Kupplungsflansch 2, Kupplungsnabe 3, Federn 14, 24 und Anschlägen 23 gebildet sind. Entsprechend kann der Kupplungsflansch 2 gegenüber der Kupplungsnabe 3 in jeder Umfangsrichtung 22 um einen Winkel 39 verdreht werden, so dass die Anschläge 23 sukzessive, insbesondere zuerst mit der Feder 24 (hier eine Torsionsfeder) und nachfolgend mit der Blattfeder 14 in Eingriff kommen. Durch dieses sukzessive Zusammenwirken der Anschläge 23 mit den Federn 14, 24 werden die Federn 14, 24 mit einem Moment beaufschlagt. Diese Federn 14, 24 bilden zusammen die benötigte Steifigkeit der gewünschten Federkennlinie 45 (die Federkennlinie ist in Fig. 6 dargestellt). Durch das sukzessive Zusammenwirken der Anschläge 23 mit den Federn 14, 24 wird eine mehrstufige Federkennlinie 45 erzeugbar. Kupplungsflansch 2, Kupplungsnabe 3, Federn 14, 24 und Anschläge 23 bilden den Drehmomentfühler 29. Der Kupplungsflansch 2 ist dabei zusätzlich als Lamellenkorb 6 ausgebildet, so dass insgesamt eine Kupplungseinrichtung 1 realisiert wird, bei der die Funktion von Lamellenkorb 6 und Drehmomentfühler 29 miteinander kombiniert sind.

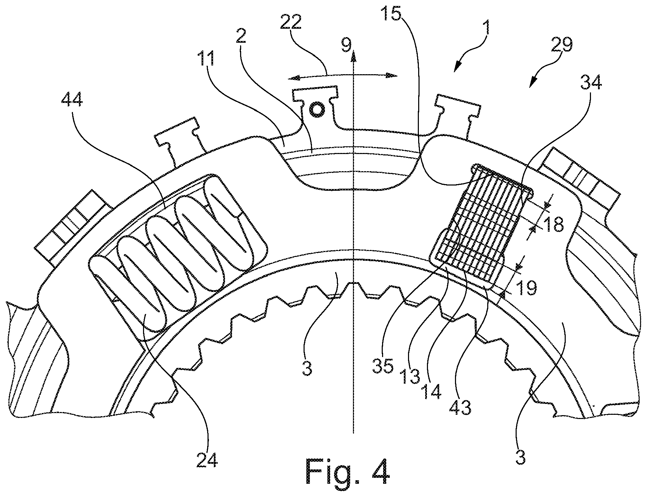

Fig. 4 zeigt ein Detail der Kupplungseinrichtung 1 gemäß der Fig. 3 in einer Seitenansicht, wobei der vordere Teil 11 des Kupplungsflansches 2 hier weggeschnitten wurde. Die Kupplungsnabe 3 weist zweite Aufnahmen 13 auf, in denen Blattfedern 14 und dritte Aufnahmen 44, in denen Federn 24 angeordnet sind. In dem Detail ist weiterhin der Kupplungsflansch 2 gezeigt, der hinter der Kupplungsnabe 3 angeordnet ist. Der vordere Teil 11 des Kupplungsflanschs 2 ist hier weggeschnitten, so dass die Kupplungsnabe 3 mit der zweiten Aufnahme 13 und der dritten Aufnahme 44 sichtbar sind. Die Blattfedern 14 werden in der zweiten Aufnahme 13 eingelegt und durch einen ersten Anschlag 15 in radialer Richtung 9 nach außen fixiert. Damit ist die Lage der Blattfedern 14 in radialer Richtung 9 nach außen festgelegt. Weiterhin werden die Blattfedern 14 in einem ersten Abschnitt 18 in einer Fixierung 34 in Umfangsrichtung 22 geklemmt, so dass die Blattfedern 14 nun auch in ihrer Position in Umfangsrichtung 22 fixiert sind. Die Blattfedern 14 erstrecken sich ausgehend von dem ersten Anschlag 15 in radialer Richtung 9 nach innen entlang einer Kontur 35 der zweiten Aufnahme 13. Die Blattfedern 14 erstrecken sich über die Kontur 35 der zweiten Aufnahme 13 hinaus und bilden einen zweiten Abschnitt 19. Bei Kontaktierung der Blattfeder 14 mit einem Anschlag 23 (hier nicht gezeigt) des Kupplungsflansches 2 werden die Blattfedern 14 in der Umfangsrichtung 22 ausgelenkt. Die Blattfedern 14 kontaktieren dabei zuerst die Kontur 35, wobei ausgehend von der gezeigten Ausgangsposition bis zum Kontakt mit der Kontur 35 die zweite Stufe 37 der Federkennlinie 45 realisiert ist. Die erste Stufe 36 der Federkennlinie kennzeichnet den Zustand der Kupplungseinrichtung 1, wenn der Anschlag 23 des Kupplungsflansches 2 die Feder 24 in der dritten Aufnahme 44 kontaktiert und zusammendrückt. Die dritte Stufe 38 der Federkennlinie 45 wird gebildet ab dem Punkt, an dem die Blattfedern 14 an der Kontur 35 in der zweiten Aufnahme 13 anliegen und die Blattfedern 14 nun darüber hinaus weiter mit einem Moment beaufschlagt werden.

Es sei darauf hingewiesen, dass die Stufen 36, 37, 38 der Federkennlinie 45 in einfacher Art und Weise zum Beispiel durch Anpassung der Kontur 35 verändert werden können. ZUM BEISPIEL kann die Kontur 35 in Umfangsrichtung 22 weiter entfernt von der Ausgangsposition der Blattfedern 14 angeordnet sein, so dass eine stärkere Biegung der Blattfedern 14 erforderlich ist, bevor diese die Kontur 35 kontaktieren. Weiterhin kann die Kontur 35 auch in radialer Richtung 9 weiter nach außen zurückgenommen werden, so dass die Kontaktierung der Kontur 35 später erfolgt.

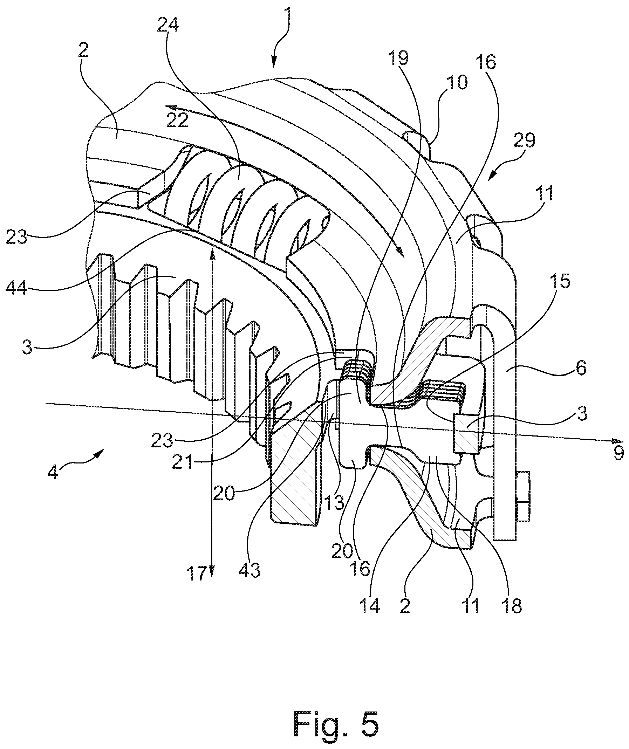

Fig. 5 zeigt ein weiteres Detail der Kupplungseinrichtung 1 in einer perspektivischen Ansicht und teilweise im Schnitt. Die Kupplungsnabe 3 wird in einer radialen Richtung 9 außen von zwei Teilen 11 des Kupplungsflanschs 2 umfasst, wobei der Kupplungsflansch 2 radial außerhalb der Kupplungsnabe 3 einen Lamellenkorb 6 mit ersten Aufnahmen 10 bildet. Die Kupplungsnabe 3 weist eine zweite Aufnahme 13 auf (hier im Schnitt dargestellt), in der Blattfedern 14 angeordnet sind. Die Blattfedern 14 kontaktieren in einer radialen Richtung 9 nach außen einen ersten Anschlag 15. In einer radialen Richtung 9 nach innen ist zwischen der zweiten Aufnahme 13 und den Blattfedern 14 ein Spalt 43 vorgesehen. Durch diesen Spalt 43 wird insbesondere die Montage der Blattfedern 14 in der zweiten Aufnahme 13 erleichtert. Weiterhin kontaktieren beide Teile 11 des Kupplungsflansches 2 die Blattfedern 14 beidseitig mit jeweils einem zweiten Anschlag 16 und ermöglichen so eine Fixierung der Blattfedern 14 in der axialen Richtung 17. Die Blattfedern 14 weisen radial außen einen ersten Abschnitt 18 auf, in dem sie durch die zweite Aufnahme 13 der Kupplungsnabe 3 in Umfangsrichtung 22 fixiert beziehungsweise geklemmt werden (siehe Fixierung 34 in Fig. 4). Die Blattfedern 14 weisen weiterhin radial innen einen zweiten Abschnitt 19 auf, in dem die Blattfedern 14 mit Anschlägen 23 (hier dritter Anschlag 21) des Kupplungsflanschs 2 als Federeinrichtung 4 zusammenwirken. Hier ist eine bevorzugte Ausgestaltung der Blattfedern 14 gezeigt. Im Bereich des zweiten Abschnitts 19 weisen die Blattfedern 14 jeweils einen Bereich 20 auf, der jeweils in axialer Richtung 17 die Kupplungsnabe 3 im Bereich der zweiten Aufnahme 13 überragt. So ist ein Zusammenwirken mit einem dritten Anschlag 21 des Kupplungsflanschs 2 in besonders einfacher Art und Weise erzielbar. Durch den Anschlag 21 werden die Blattfedern 14 in einer Umfangsrichtung 22 ausgelenkt. Wie bereits in Fig. 4 beschrieben, werden die Blattfedern 14 so zuerst an eine Kontur 35 (hier nicht gezeigt) angedrückt und sukzessive bei steigendem Moment mit dem zweiten Abschnitt 19 weiter umgebogen.

Es ist auch hier ersichtlich, dass mit zunehmender Verdrehung des Kupplungsflanschs 2 gegenüber der Kupplungsnabe 3 in Umfangsrichtung 22 ein sukzessiver Eingriff von Anschlägen 23 und insbesondere von dritten Anschlägen 21 mit Federn 24 und Blattfedern 14 erreichbar ist. Diese unterschiedlichen Eingriffe bilden gemeinsam die Federeinrichtung 4, so dass ein Drehmomentfühler 29 realisiert wird.

Es sei hier angemerkt, dass üblicherweise eine symmetrische Anordnung von Anschlägen 23 und dritten Anschlägen 21 gegenüber den Federn 24 und Blattfedern 14 in beiden Umfangsrichtungen 22 vorgesehen ist. Gleichwohl können in einer bevorzugten Ausgestaltung diese Anschläge 23 und 21 gemeinsam oder auch einzeln und nur in einer Verdrehrichtung so gegenüber der anderen Verdrehrichtung abgeändert werden, dass unterschiedliche Federkennlinien in Abhängigkeit von der Drehrichtung realisiert sind. Entsprechend werden für Steigerungen und Absenkungen der Drehmomente des Motors 25 unterschiedliche Federkennlinien 45 realisierbar.

Fig. 6 zeigt eine Federkennlinie 45 des Drehmomentfühlers 29. Dabei ist entlang einer horizontalen Achse der Winkel 39 und entlang der vertikalen Achse das Drehmoment 40 aufgetragen. Erkennbar ist der Verlauf einer mehrstufigen Federkennlinie 45. Die Federkennlinie 45 weist in der Nähe des Nullpunkts eine erste Stufe 36 auf, nachfolgend eine zweite Stufe 37 und dann eine dritte Stufe 38. Der Verlauf dieser Federkennlinie 45 kann verändert werden durch unterschiedliche Anordnungen der Anschläge 23 beziehungsweise dritten Anschläge 21 (siehe Ausführungen oben zu den anderen Figuren). Gleichermaßen können selbstverständlich andere Federn mit unterschiedlichen Steifigkeiten eingesetzt werden. Ebenso können die Positionen der Anschläge 21, 23, und auch die Lage zum Beispiel der Kontur 35 für jeweils eine Verdrehrichtung des Kupplungsflansches 2 gegenüber der Kupplungsnabe 3 verändert werden. In diesem Fall sind auch nicht symmetrische Verläufe der Federkennlinie 45 (bezogen auf den Schnittpunkt des hier gezeigten Diagramms) realisierbar.

Fig. 7 zeigt ein Kraftfahrzeug 32 mit einem Motor 25, insbesondere einer Verbrennungskraftmaschine, der eine Antriebswelle 30 antreibt. Über eine Kupplungseinrichtung 1 ist die Antriebswelle 30 mit einer Abtriebswelle 31 verbunden. Die Abtriebswelle 31 ist hier mit einem Getriebe 26 verbunden, dass eine Übertragung von Drehmomenten auf einen Antriebsstrang 46 des Kraftfahrzeugs 32 ermöglicht. Der Motor 25 ist vor einer Fahrerkabine 47 ausgebildet. Die Antriebswelle 30 und die Abtriebswelle 31 rotieren um die Rotationsachse 48, die quer zu einer Längsachse 49 des Kraftfahrzeuges 32 ausgerichtet ist.

Die hier gezeigte und beschriebene Kupplungseinrichtung 1 ist weniger komplex als bekannt angenommene entsprechende Kupplungseinrichtungen, wobei Funktionen von Lamellenkorb 6 und Drehmomentfühler 29 zusammengefasst werden. Dadurch werden weniger Teile erforderlich, die jedoch weiterhin die gleichen Funktionen aufweisen. Der Aufbau wird weniger komplex, der Montageaufwand geringer und die Kosten entsprechend reduziert. Die Kupplungseinrichtung 1 ist flexibel an unterschiedliche Anforderungen anpassbar.

### Bezugszeichenliste

- 1: Kupplungseinrichtung
- 2: Kupplungsflansch
- 3: Kupplungsnabe
- 4: Federeinrichtung
- 5: Federkennlinie
- 6: Lamellenkorb
- 7: Lamellen
- 8: Kupplung
- 9: Radiale Richtung
- 10: erste Aufnahme
- 11: Teil
- 12: Seite
- 13: Zweite Aufnahme
- 14: Blattfeder
- 15: Erster Anschlag
- 16: Zweiter Anschlag
- 17: Axiale Richtung
- 18: Erster Abschnitt
- 19: Zweiter Abschnitt
- 20: Bereich
- 21: Dritter Anschlag
- 22: Umfangsrichtung
- 23: Anschlag
- 24: Feder
- 25: Motor
- 26: Getriebe
- 27: Hauptkupplung
- 28: Vorkupplung
- 29: Drehmomentfühler
- 30: Antriebswelle
- 31: Abtriebswelle
- 32: Kraftfahrzeug
- 33: Befestigungselement
- 34: Fixierung
- 35: Kontur
- 36: Erste Stufe
- 37: Zweite Stufe
- 38: Dritte Stufe
- 39: Winkel (Grad)
- 40: Moment (Nm)
- 41: Keilverzahnung
- 42: Innenumfangsfläche
- 43: Spalt
- 44: Dritte Aufnahme
- 45: Federkennlinie
- 46: Antriebsstrang
- 47: Fahrerkabine
- 48: Rotationsachse
- 49: Längsachse

## Patentansprüche

1. Kupplungseinrichtung (1), insbesondere eine Booster-Kupplungseinrichtung, zumindest umfassend einen Kupplungsflansch (2) und eine Kupplungsnabe (3), die koaxial zueinander angeordnet und miteinander über eine Federeinrichtung (4) mit einer mehrstufigen Federkennlinie (5) gekoppelt sind, wobei der Kupplungsflansch (2) einen Lamellenkorb (6) mit mindestens einer ersten Aufnahme (10) zur Aufnahme von Lamellen (7) für eine Kupplung (8) bildet, wobei die Kupplungsnabe (3) mindestens eine zweite Aufnahme (13) für mindestens eine Blattfeder (14) aufweist, wobei die mindestens eine Blattfeder (14) durch die Kupplungsnabe (3) selbst fixiert ist, wobei die mindestens eine Blattfeder (14) sich in einer radialen Richtung (9) erstreckt und in einem äußeren ersten Abschnitt (18) durch die Kupplungsnabe (3) fixiert ist und mit einem weiter innenliegenden zweiten Abschnitt (19) mit dem Kupplungsflansch (2) als Federeinrichtung (4) gekoppelt ist.

2. Kupplungseinrichtung (1) nach Anspruch 1, wobei der Kupplungsflansch (2) die Kupplungsnabe (3) in einer radialen Richtung (9) gesehen außen von beiden Seiten der Kupplungsnabe (3) umschließt und dort die erste Aufnahme (10) für die Lamellen (7) bildet.

3. Kupplungseinrichtung (1) nach einem der vorhergehenden Ansprüche, wobei der Kupplungsflansch (2) zweitteilig ausgeführt ist und jedes Teil (11) des Kupplungsflansches (2) auf jeweils einer Seite (12) der Kupplungsnabe (3) angeordnet ist.

4. Kupplungseinrichtung (1) nach einem der vorhergehenden Ansprüche, wobei die mindestens eine Blattfeder (14) durch die Kupplungsnabe (3) selbst durch Klemmung fixiert ist.

5. Kupplungseinrichtung (1) nach einem der vorhergehenden Ansprüche, wobei die zweite Aufnahme (13) einen ersten Anschlag (15) aufweist, durch den die mindestens eine Blattfeder (14) in einer radialen Richtung (9) nach außen fixiert ist.

6. Kupplungseinrichtung (1) nach einem der vorhergehenden Ansprüche, wobei der Kupplungsflansch (2) zumindest auf einer Seite (12) der Kupplungsnabe (3) einen zweiten Anschlag (16) aufweist, durch den die mindestens eine Blattfeder (14) in zumindest einer axialen Richtung (17) fixiert ist.

7. Kupplungseinrichtung (1) nach einem der vorhergehenden Ansprüche, wobei die mindestens eine Blattfeder (14) in dem inneren zweiten Abschnitt (19) einen Bereich (20) aufweist, der zumindest in einer axialen Richtung (17) über die zweite Aufnahme (13) der Kupplungsnabe (3) übersteht, wobei der Bereich (20) mit einem dritten Anschlag (21) des Kupplungsflansches (2) in einer Umfangsrichtung (22) als Federeinrichtung (4) gekoppelt ist.

8. Kupplungseinrichtung (1) nach einem der vorhergehenden Ansprüche, wobei der Kupplungsflansch (2) zur Kupplungsnabe (3) in beide Umfangsrichtung (22) verdrehbar angeordnet ist und der Kupplungsflansch (2) mehrere, in beide Umfangsrichtungen (22) wirkende Anschläge (23) aufweist, die jeweils mit Federn (14, 24), die in der Kupplungsnabe (3) angeordnet sind, gekoppelt sind, so dass Anschläge (23) und Federn (14, 24) als Federeinrichtung (4) in beiden Umfangsrichtungen (22) zusammenwirken, wobei die in der einen Umfangsrichtung (22) wirkenden Anschläge (23) gegenüber den in der anderen Umfangsrichtung (22) wirkenden Anschlägen (23) unterschiedlich ausgebildet sind, so dass die Federeinrichtung (4) in unterschiedlichen Umfangsrichtungen (22) unterschiedlich wirkt.

9. Kupplungseinrichtung (1) nach einem der vorhergehenden Ansprüche, wobei die Kupplungsnabe (3) zwei in eine axiale Richtung (17) weisende Seiten (12) aufweist, und die Seiten (12) identisch ausgeführt sind.

## Claims

1. Clutch device (1), in particular a booster clutch device, at least comprising a clutch flange (2) and a clutch hub (3), which are arranged coaxially with one another and are coupled together via a spring device (4) having a multistage spring characteristic (5), wherein the clutch flange (2) forms a plate cage (6) having at least one first receptacle (10) for receiving plates (7) for a clutch (8), wherein the clutch hub (3) has at least one second receptacle (13) for at least one leaf spring (14), wherein the at least one leaf spring (14) is fixed by the clutch hub (3) itself, wherein the at least one leaf spring (14) extends in a radial direction (9) and is fixed in an outer first portion (18) by the clutch hub (3), and is coupled to the clutch flange (2) as spring device (4) by way of a second portion (19) located further on the inside.

2. Clutch device (1) according to Claim 1, wherein the clutch flange (2) encloses the clutch hub (3) on the outside from both sides of the clutch hub (3), as seen in a radial direction (9), and forms the first receptacle (10) for the plates (7) there.

3. Clutch device (1) according to either of the preceding claims, wherein the clutch flange (2) is embodied in two parts and each part (11) of the clutch flange (2) is arranged on in each case one side (12) of the clutch hub (3).

4. Clutch device (1) according to one of the preceding claims, wherein the at least one leaf spring (14) is fixed by the clutch hub (3) itself by clamping.

5. Clutch device (1) according to one of the preceding claims, wherein the second receptacle (13) has a first stop (15), by which the at least one leaf spring (14) is fixed towards the outside in a radial direction (9).

6. Clutch device (1) according to one of the preceding claims, wherein the clutch flange (2) has, at least on one side (12) of the clutch hub (3), a second stop (16), by which the at least one leaf spring (14) is fixed in at least an axial direction (17).

7. Clutch device (1) according to one of the preceding claims, wherein the at least one leaf spring (14) has, in the inner second portion (19), a region (20) that protrudes at least in an axial direction (17) beyond the second receptacle (13) of the clutch hub (3), wherein the region (20) is coupled to a third stop (21) of the clutch flange (2) in a circumferential direction (22) as spring device (4).

8. Clutch device (1) according to one of the preceding claims, wherein the clutch flange (2) is arranged so as to be rotatable in both circumferential directions (22) with respect to the clutch hub (3), and the clutch flange (2) has a plurality of stops (23) that act in both circumferential directions (22) and are each coupled to springs (14, 24) that are arranged in the clutch hub (3), such that stops (23) and springs (14, 24) interact as spring device (4) in both circumferential directions (22), wherein the stops (23) that act in one circumferential direction (22) are formed differently from the stops (23) that act in the other circumferential direction (22), such that the spring device (4) acts differently in different circumferential directions (22).

9. Clutch device (1) according to one of the preceding claims, wherein the clutch hub (3) has two sides (12) that face in an axial direction (17), and the sides (12) are embodied in an identical manner.

## Revendications

1. Dispositif de couplage (1), en particulier dispositif de couplage de booster, comprenant au moins une bride de couplage (2) et un moyeu de couplage (3) qui sont disposés coaxialement l'un par rapport à l'autre et sont couplés l'un à l'autre par un dispositif à ressort (4) ayant une caractéristique de ressort à degrés multiples (5), la bride de couplage (2) constituant un panier à lamelles (6) doté d'au moins un premier support (10) destiné à recevoir des lamelles (7) pour un couplage (8), le moyeu de couplage (3) présentant au moins un second support (13) pour au moins un ressort à lame (14), l'au moins un ressort à lame (14) étant fixé par le moyeu de couplage (3) lui-même, l'au moins un ressort à lame (14) s'étendant dans un sens radial (9) et étant fixé dans une première section extérieure (18) par le moyeu de couplage (3) et étant couplé à une seconde section (19) située plus loin à l'intérieur à la bride de couplage (2) servant de dispositif à ressort (4).

2. Dispositif de couplage (1) selon la revendication 1, dans lequel la bride de couplage (2), vue dans un sens radial (9), entoure le moyeu de couplage (3) à l'extérieur par les deux côtés du moyeu de couplage (3) et y constitue le premier support (10) pour les lamelles (7).

3. Dispositif de couplage (1) selon une des revendications précédentes, dans lequel la bride de couplage (2) est réalisée en deux pièces et chaque pièce (11) de la bride de couplage (2) est disposée respectivement sur un côté (12) du moyeu de couplage (3).

4. Dispositif de couplage (1) selon une des revendications précédentes, dans lequel l'au moins un ressort à lame (14) est fixé par le moyeu de couplage (3) lui-même par serrage.

5. Dispositif de couplage (1) selon une des revendications précédentes, dans lequel le second support (13) présente une première butée (15) grâce à laquelle l'au moins un ressort à lame (14) est fixé dans un sens radial (9) vers l'extérieur.

6. Dispositif de couplage (1) selon une des revendications précédentes, dans lequel la bride de couplage (2) présente, au moins sur un côté (12) du moyeu de couplage (3), une deuxième butée (16) grâce à laquelle l'au moins un ressort à lame (14) est fixé dans au moins un sens axial (17).

7. Dispositif de couplage (1) selon une des revendications précédentes, dans lequel l'au moins un ressort à lame (14) présente, dans la seconde section (19) intérieure, une partie (20) qui, du moins dans un sens axial (17), dépasse du second support (13) du moyeu de couplage (3), cette partie (20) étant couplée à une troisième butée (21) de la bride de couplage (2) dans un sens circonférentiel (22) sous forme d'un dispositif à ressort (4).

8. Dispositif de couplage (1) selon une des revendications précédentes, dans lequel la bride de couplage (2) est disposée de manière à pouvoir tourner par rapport au moyeu de couplage (3) dans les deux sens circonférentiels (22) et la bride de couplage (2) présente plusieurs butées (23) agissant dans les deux sens circonférentiels (22) et qui sont respectivement couplées à des ressorts (14, 24) qui sont disposés dans le moyeu de couplage (3), de sorte que les butées (23) et les ressorts (14, 24) coopèrent dans les deux sens circonférentiels (22) en tant que dispositif à ressort (4), les butées (23) agissant dans un des sens circonférentiels (22) étant réalisées différemment des butées (23) agissant dans l'autre sens circonférentiel (22), de sorte que le dispositif à ressort (4) agit différemment dans différents sens circonférentiels (22).

9. Dispositif de couplage (1) selon une des revendications précédentes, dans lequel le moyeu de couplage (3) présente deux côtés (12) tournés dans un sens axial (17) et les côtés (12) ont une conformation identique.
